# EUROPEAN PATENT APPLICATION

(11) **EP 4 032 443 A1**
(43) Date of publication of application: **27.07.2022**
(21) Application number: 21020033.3
(22) Date of filing: 26.01.2021
(51) Int. Cl.: A47J 27/00, A47J 27/13, A47J 36/10, A47J 36/36, A47J 37/06

(54) **DEVICE FOR HEATING FOOD**

(71) Applicant: ILme innorooms Ltd, 95410 Tornio (FI)
(72) Inventor: Stoor, Elina Tellervo, 95410 Tornio (FI)

(57) **Abstract**

There is provided a device (100) for heating food, comprising: a first part (110) comprising a cavity (112) and at least a double layer wall structure providing a space between an inner subpart (114) and an outer subpart (116); a second part (120) comprising a cavity (122) and at least a double layer wall structure providing a space between an inner subpart (124) and an outer subpart (126); and at least one handle (150) for holding the device, wherein the first and second parts (110, 120) are placeable against each other such that the cavities (112, 122) form an enclosed chamber (140) for the food and outer surfaces of the outer subparts (116, 126) form a heat receiving surface.

## Description

### TECHNICAL FIELD

Various example embodiments relate generally to a device for heating food.

### BACKGROUND

It is common to heat food over an open fire, by utilizing e.g. bonfire or a stove. A known problem is that the flames of the open fire may burn the food. One means for solving the problem is to wrap the food in a layers of foil. However, this is cumbersome and environmentally non-friendly. Using a pan or kettle may isolate food from direct flames, but the results are often that food gets stuck on the inner surface of the pan or kettle. There is also a risk that the food may drop from the open kettle or pan. Furthermore, handling the pan or kettle may be problematic during of heating in the open fire. Therefore, there is a need for multipurpose, environmentally friendly, efficient and safe way of heating food by utilizing open fire and/or embers.

### BRIEF DESCRIPTION

According some aspects, there is provided the subject matter of the independent claims. Some further aspects are defined in the dependent claims. The embodiments that do not fall under the scope of the claims are to be interpreted as examples useful for understanding the disclosure.

### LIST OF THE DRAWINGS

In the following, the invention will be described in greater detail with reference to the embodiments and the accompanying drawings, in which
Figures 1A to 1G illustrate the device, according to some embodiments;
Figures 2A to 2E show how subparts may be fastened to each other, according to some embodiments;
Figures 3A to 3G show examples related to different attaching mechanisms for a handle of the device, according to some embodiments;
Figures 4A and 4B illustrate the handle, according to some embodiments; and
Figures 5A and 5B illustrate how the device may be used on an open fire, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "A or B" and "A and/or B" means (A), (B), or (A and B). The Figures are not drawn in scale.

As discussed above, a foil or common frying pans, kettles, hiking cooking kits or camping cookers may be used for heating food over an open fire, but all of these have drawbacks. E.g. the food may burn, the food may stick to the surface of the cooking device, they are environmentally non-friendly due to their disposable character, user's hands get burn due to heat of the open fire, food is difficult to heat from different sides, etc. These problems may realize especially when cooking over a large open fire, such as on top of campfires or stove fires.

To at least partially tackle at least some of these problems, there is proposed a device for heating/warming food, which may also be called a heating device or a cooking device. Embodiments of the device are illustrated in the figures. As shown in Figures, the device 100 for heating food on an open fire comprises a first part 110 comprising a cavity 112 and at least a double layer wall structure providing a space 118 between an inner subpart 114 and an outer subpart 116. The device 100 further comprises a second part 120 comprising a cavity 122 and at least a double layer wall structure providing a space 128 between an inner subpart 124 and an outer subpart 126. The first part may be called also a lower part, a bottom part, a pan, a pot, or a kettle, while the second part may be called an upper part, a lid, a cover part, a pan, pot, or a kettle, for example. The first part 110 may comprise the inner subpart 114 and the outer subpart 116. The second part 120 may comprise the inner subpart 124 and the outer subpart 126. The subparts 114, 116, 124, 126 may also be called layers. The inner subpart 114, 124 may be called an inner pan, a pot, or a kettle, while the outer subpart 116, 126 may be called an outer pan, a pot, or a kettle.

The first and second parts 110, 120 are placeable against each other (e.g. on their peripheral edges of the cavities, such on the peripheral edges of the subparts 114 and 124) such that, when the first and second parts 110, 120 are placed against each other, the cavities 112, 122 form an enclosed chamber 140 for the food and outer surfaces of the outer subparts 116, 126 form a heat receiving surface. I.e. these outer surfaces may be in direct contact with the heat of the flame and/or the flame itself. The food to be heated may be put inside the chamber 140.

In an embodiment, the space 118 and/or 128 may be an air space. Such air spaces may efficiently reduce or avoid the food in the cavity/-ies 112, 122 to burn and/or stick on the inner surface of the inner subparts 114, 124. That is, the food can be heated in the chamber 140 without high risks of damaging the food.

In one embodiment, the space 118 and/or 128 may be sealed and filled with a gas or vacuum that has high insulation properties. Such gas may be determined based on empirical testing or based on literature.

Although shown with double layer wall in the Figures, there may be three or more layers for even more efficient insulation. In such cases, one or more of the at least two spaces may be filled with suitable gas or each of the spaces may be an air space. As such, the device 100 may be suitable for e.g. stewing or simmering the food efficiently.

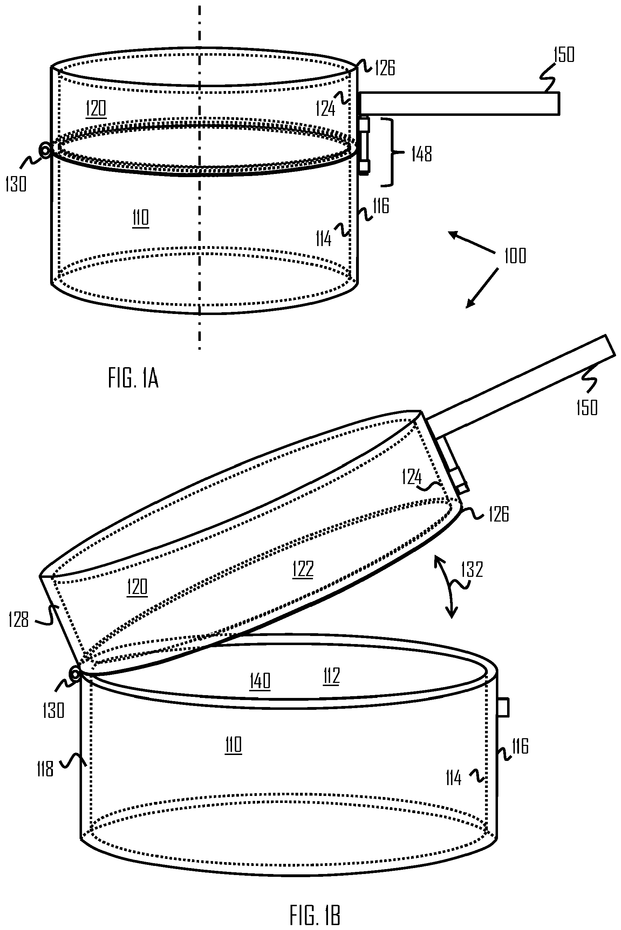

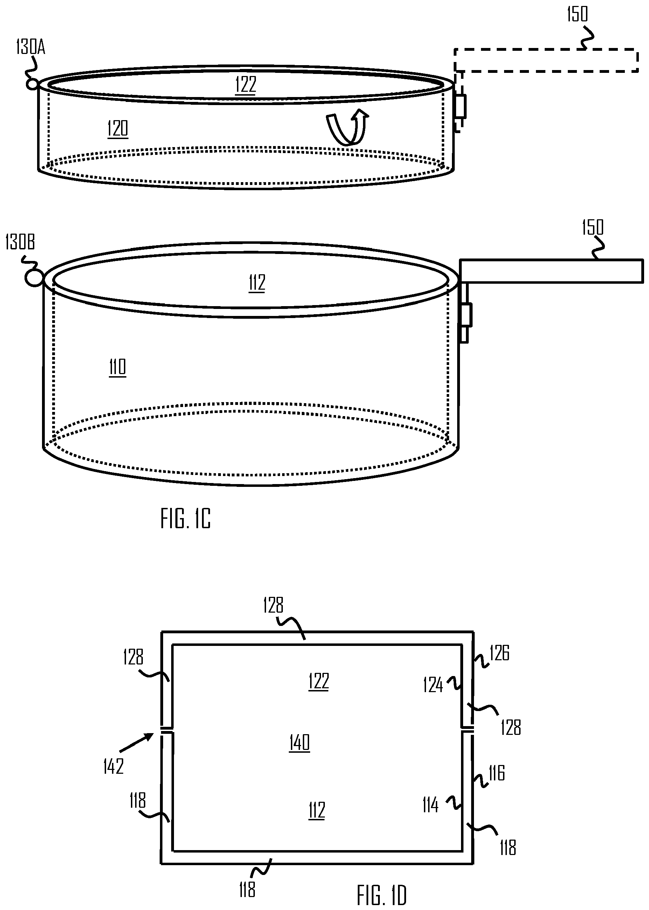

Figure 1D provides a cross-sectional view along the dot-dashed line of Figure 1A. As shown, the double layer wall structure applies to the bottom wall as well as to the side walls of the parts 110, 120. Consequently, the spaces 118, 128 surround substantially the whole periphery of the inner subparts 114, 124. However, in some embodiments the space 118,128 is provided only in certain locations, such as on the bottom wall and the ceiling wall, which are typically most exposed to the heat. Such modification of the shown structure may be made by dimensioning the diameters of the subparts appropriately, or by modifying the width of the side walls, for example, although not shown in Figures. Also, although not shown in Figures, the space 118 may have different volume at different locations. For example, the space 118 may be thicker at the bottom wall and a thinner at the sidewalls. The same may be applied to the space 128. Such modification may be obtained by dimensioning the subparts 114, 116, 124, 126 appropriately, for example.

The subparts 114, 116,124,126 may be made of metal, such as stainless steel. Alternatively, any other material may be used which can withstand high temperatures and open flames. One example material for building the subparts may be titanium. Also, the material of the inner subpart may be at least partially different from that of the outer subpart. E.g. the inner subpart may be covered with Teflon or alike on the inner surface which in contact of the food, while the outer subpart may be steel.

In an embodiment, at least one of the parts 110, 120 may be at least partially of a transparent material, such as a heat resistant glass, so as to allow the user to see inside the enclosed chamber 140 during heating of the food.

In an embodiment, the device further comprises a hinge 130 for fastening the first part 110 to the second part 120 at one side of the device 100. This may allow a pivotable opening of the parts 110, 120 at the other side of the device 100, as shown with reference numeral 132 in Figure 1B. This may be efficient for the user of the device 100 to quickly check if the food is ready yet, or to add or remove ingredients to/from the chamber 140. In another embodiment, although not shown, the device does not comprise the hinge 130 but the handle is used to keep the parts 110, 120 securely together, as will be explained later.

Yet in one embodiment, the parts 110, 120 may comprise at least partially magnetic material where in the positioning of the magnetic material is such that the parts pull each other together on the edges of the cavities. With such magnetic force, the parts 110, 120 may stay firmly against each other when not manually pulled apart by user's actions.

In an embodiment, the structure of the hinge 130 may be such that it can be quickly disassembled. This may provide an efficient manner to have the parts 110, 120 removed from each other. Such removal is shown in Figure 1C. In an embodiment, the hinge 130 may comprise members 130A and 130B which can be removed from each other, wherein member 130A is attached to the part 110 while the member 130B is attached to the part 120. It is considered that suitable hinges for this purpose (i.e. which can be quickly assembled and disassembled manually by the user) are known to a skilled person and are not disclosed herein in details. However, as one example, the members 130A and 130B may be assembled with a hinge pin pushed through both members 130A, 130B, wherein the hinge pin can be locked in place with a screw, or alike.

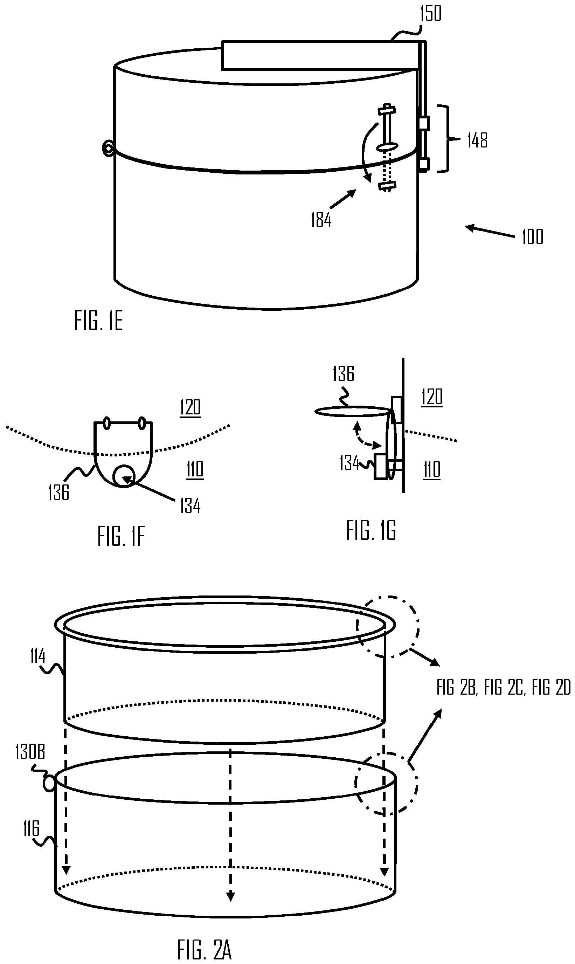

In one embodiment, instead of the hinge 130, the parts 110 and 120 may be removably attachable to each other by means of locking mechanism, such as a latch structure depicted in Figures 1F and 1G. There, a hinged latch 136 attached to one of the parts 110, 120, e.g. in part 120 as in the Figure, can be removably secured to the other part's 110 knob 134, for example. The latch may be lockable. The knob may have any form appropriate to the use case. In an embodiment, the knob is substantially round.

As shown in the lower part of Figure 1C, the part 110 may then be used separately from the part 120. This allows e.g. for easily distributing or otherwise removing food from the cavity 112. Also, the part 110 may be used for heating food even without the part 120. Likewise, in an embodiment, shown in the upper part of Figure 1C, the part 120 may then be used separately from the part 110. It should be noted that the part 120 is in Figure 1C turned upside down compared to that of Figure 1A. This allows e.g. for easily distributing or otherwise removing food from the cavity 122. Also, the part 120 may be used for heating food even without the part 110. As shown and later explained, the single handle 150 may be attached to either of the parts 110, 120. In one embodiment, however, the device 100 comprises a spare handle.

In an embodiment, the cavities 112 and 122 have different depths. This may allow using one of the parts as a frying pan while using other of the parts as a kettle, for example. Such multipurpose nature of the device 100 provides benefits for outdoor hiking and camping trips, where the space required by different objects in a back bag should be minimized.

In an embodiment, the parts 110, 120, which may be at least partially formed by the subparts (layers) 114, 116, 124, 126, may be of substantially cylindrical shape with one open end. Likewise, the subparts 114, 116, 124, 126 may be of substantially cylindrical shape with one open end. Some nonlimiting example dimensions of the part 110 and/or 120 may be e.g. diameter between 10 to 60 centimeters and depth of 2 to 20 centimeters. In an embodiment, each of the parts 110, 120 comprises a bottom wall and substantially upwards extending sidewalls. An alternative structure may be a hemispherical form, or one or more of the parts may have a square or rectangular bottom with rounded edges. In an embodiment, the designs of the parts 110 and 120 are different. For example, the part 120 may be of hemispherical shape while the part 110 may comprise the bottom wall and upwardly extending side walls. In an embodiment, the inner and outer subparts define the form of the respective part. For example, the inner subpart forms the cavity of the respective part. Therefore, the subparts may similarly have a bottom wall and substantially upwards extending sidewalls or a hemispherical shape. The subparts may each have the same shape or one or more of them may differ in their forms, as long as the dimensions of the parts 110 and 120 are such that those may be placed against each other to form the enclosed chamber 140. In one embodiment, the inner subpart has hemispherical shape while the outer subpart comprises the bottom wall and upwardly extending side walls. This may allow for more air space between the subparts, although with a compromise of reducing the space for the food. In an embodiment, the first and/or second part may have rounded edges. In an embodiment, the handle(s) described in the application may be applied to different shapes of the parts by dimensioning the handles appropriately based on the dimensions and shape of the corresponding first and/or second part.

In an embodiment, the peripheries 142 (see Figure 1D) of the cavities 112,122 of the parts 110, 120 may be placed against each other. In an embodiment, at least one of the peripheries may comprise a sealing member for sealing the enclosed chamber 140 when the parts 110, 120 are placed against each other. This may be beneficial in case the food to be heated comprises liquid, such as water or milk. The material for the sealing member may be e.g. heat resistant silicone, or alike. In an embodiment, there may be small holes on the outer subpart 116 and/or 126, or in the sealing member, in order to allow for the heated air or gas in the space 118/128 to escape.

In an embodiment, the inner subparts 114 and the outer subpart 116 are welded together, while ensuring that the space 118 is provided between the subparts 114 and 116. The welding may be performed along the circumference or rim of the inner subpart 114 while leaving holes in the circumferential welding, so as to allow for the heated air or gas in the space 118 to escape. Similar welding structure may be applied to the other subparts 124, 126.

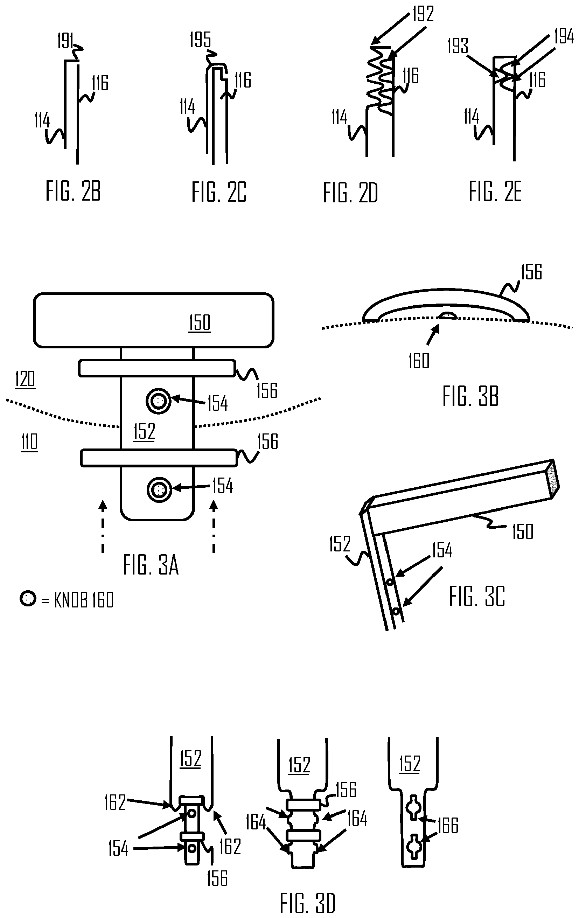

In an embodiment, as shown in Figures 2A-2E, each of the inner subparts 114 and 124 and the respective outer subparts 116 and 126 comprise a mutually complementary fastening mechanism. Such mechanism may allow releasable fastening of the inner subpart to the respective outer subpart. Releasable fastening may be beneficial as this may allow e.g. washing the parts separately and thoroughly. Although in Figures 2B-2E shown only for the part 110 (comprising subparts 114, 116), similar solution may be applied for the part 120 (comprising subparts 124, 126).

Figure 2B shows an embodiment for the fastening mechanism, which is based on an L-shaped structure where the inner subpart 114 has a supporting member 191 which rests on the outer subpart 116. This embodiment provides for a mechanically simple and quick manner of providing the space between the subparts and for keeping the peripheries of the subparts against each other.

In an embodiment, shown in Figure 2C, a supporting member 195 of the inner subpart 114 is rounded or bent so as to rest steadily on the upper edge of the subpart 116. Such rounding may further avoid damages to the user. The subpart 116 may have appropriately shaped upper edge, so as to receive the rounded supporting member 195 in a firm manner. The wall of the outer subpart 116 may be straight as shown in Figure 2B, or it may be curved, e.g. inwards to provide larger air space 118, for example.

Figure 2D shows another embodiment for the fastening mechanism. This is based on the inner subpart and the outer subpart having mutually complementary spiral threads 192 that may be used to screw the parts together. This embodiment may provide for a firm and tight attachment of the subparts together removably. The dimensions of the subparts 114 and 116, and the location of the threads in the subparts 114, 116 may define the amount of space 118, 128 that is left between the inner and outer subparts 114, 116, when the subparts 114, 116 are attached to each other along the dashed arrows of Figure 2A.

Figure 2E shows yet another embodiment for the fastening mechanism. This is based on the inner subpart and the outer subpart having mutually complementary clicking mechanism. For example, the inner part 114 may comprise a knob 193 that is placed under one knob or between two knobs 194 of the outer subpart 116, or vice versa. Alternatively, there may be more than one knob that is placed between sets of two complementary knobs for more secure attachment. The knobs or the subparts may be flexible enough to allow pushing the knob 193 across the peaks of the knobs 194. Although e.g. the knob 193 is shown as a single knob, in an embodiment, the whole periphery of the outer surface of the inner subpart 114 may have such protrusion. Similarly, the knobs 194 may be formed by a circular protrusion on the inner surface of the outer subpart 126, rather than individual knobs here and there on the inner surface of the outer subpart 126. This embodiment may provide for a firm, tight and quick attachment of the subparts together, yet removably. The dimensions of the subparts 114 and 116, and the location of the knobs in the subparts 114, 116 may define the amount of space 118, 128 that is left between the inner and outer subparts 114, 116, when the subparts 114, 116 are attached to each other along the dashed arrows of Figure 2A.

In yet one embodiment for the complementary clicking mechanism (not shown) may allow turning one of the parts 110, 120 with respect to the other part 120, 110 such that they click together. This may be accomplished with appropriately shaped (matching) protrusions and apertures fixed on the inner surface of the outer layer 116, 126 and on the outer surfaces of the inner layers 114, 124, or vice versa.

In an embodiment, there may be intermittent protrusions on the circumference or rim of the outer parts 116, 126, so that when the respective inner subpart 114, 124 rests on the circumference of the respective outer subpart, the contact is not airtight. This may allow for the heated air in the space 118, 128 to escape.

In an embodiment, there may be small holes on the outer subpart 116 and/or 126 in order to allow for the heated air or gas in the space 118/128 to escape.

The device 100 may further comprise at least one handle 150 for holding the device 100. The handle may be made of metal. However, at least part of the handle may be made of wood, for example, or any material that does not become as hot as metal, in order to enable the user to hold the device 100 on the handle 150. In one embodiment, the handle 150 is fixed to the outer surface or one or both of the parts 110, 120. In an embodiment, there is one handle. In another embodiment, there are more than one handle.

In an embodiment, as shown e.g. in Figures 1A, 1B, 1C and 1E, the handle 150 (for simplicity let us assume there is only one handle) and each of the outer surfaces of the first and second parts 110, 120 comprise a mutually complementary attaching mechanism 148 for removably attaching the handle 150 to one or both of the outer surfaces. In other words, the handle 150 may be attached to only the first part 110 (Figure 1C, lower part), to only the second part 120 (Figure 1C, upper part, and Figure 1B), or to both of the parts 110, 120 (Figure 1A). This provides ease of usage, as the same handle 150 may be used to lift and/or hold each of the parts 110, 120 separately or together.

In an embodiment, the attaching mechanism 148, when the handle 150 is attached to both outer surfaces of the parts 110, 120, locks the first and second parts 110, 120 together. This is shown in Figure 1A. The user can then lift the device 100 by the handle 150 and the parts 110, 120 would remain fixed to each other. This may provide for secure closing of the parts 110, 120 together, so that no food drops while using the device for heating. For example, the hinge 130 keeps the parts 110, 120 together securely on one side while the attaching mechanism 148 of the handle 150 keeps the parts 110, 120 together securely on the other side of the device.

In an embodiment, the attaching mechanism 148 allows attaching the handle 150 such that the handle 150 extends from the parts 110, 120, as in Figure 1A for example. Let us call this a first position/direction of the handle, which is advantageous when using the device. However, the same attaching mechanism 148, and the dimensions of the handle 150, may allow attaching the handle 150 in an opposite (180 degrees) direction than in Figure 1A such that the handle 150 lies against the outer surface of either of the parts 110, 120, as shown in Figure 1E. This may be possible as the handles locking/attaching mechanism is symmetrical on both sides of the handle. E. g. when the locking mechanism comprises apertures, then it is clear that the handle can be attached to the device's outer surface in one direction and also in another opposite direction, as long as the dimensions of the handle with respect to the dimensions of the part 110 and/or 120 so allow. This may reduce the space required for storing the device 100. By dimensioning the handle 150 it is meant that e.g. the L-shape of the handle 100 has appropriately dimensioned lengths to be placed against the outer surface of the bottom wall of one of the parts 110, 120. To be noted that the dimensions of the handle in Figures 1A and 1E, for example, differ to show that several different lengths are possible, depending on which embodiment is applied. Such an embodiment may also securely lock the first and second parts 110, 120 together during transportation by the attaching mechanism 148.

Let us next look at one possible embodiment for the attaching mechanism 148 of the handle, which may allow the above-mentioned use cases. This is shown in Figures 3A-3G. The dotted line therein represents separation between parts 110 and 120. Figure 3B shows a view of Figure 3A from the direction of the dot-dashed arrows.

For ease of explaining some of the Figures, the handle 150 is shown to comprise a bar 152 that is attached to the outer surface of the device 100. The Figures show the handle to be substantially L shaped, but it may differ from this shape in other embodiments. Also, the handle may comprise joints that allow pivotable turning of the handle e.g. when removed from the parts in order to provide for smaller storage space, although not shown in the Figures.

In an embodiment, the handle bar 152 may comprise at least one hole 154. For more secure locking, there may be two (or more) holes 154, as shown in the Figures 3A to 3D (left side Figure). The parts 110 and 120 may comprise knob(s) 160 at complementary locations of the outer surface of the outer subparts 116, 126. When the handle is attached to the device 110, 120, the knobs 160 (one or more), shown with dotted circles in Figures 3A and 3B, at least partially fill the holes 154 (one or more) and thus keeps the bar 152 from sliding along the surface of the device 100. The parts 110, 120 may also comprise one or more arcs 156. The shape of the support 156 need not be an arc, but any form will do that is dimensioned to allow the handle bar 152 to slide between the support member 156 and the outer surface of the device 100 and still to hold the handle bar 152 steadily against the outer surface of the device 100. In other words, the user may slide the handle bar 152 between the support member 156 and the outer surface of the subpart 116, 126 as far as the holes 154 meet the corresponding knobs 160. The material/flexibility of the bar 152 and/or the knobs 160 may be made such that either or both of them gives in slightly when pushed, but still attach the handle firmly when the knobs 160 and the holes 154 meet. Alternatively, the knobs 160 may be associated with a spring tension that allows the knobs 160 to be pushed in slightly when the bar 152 is sled between the surface of the subparts 116, 126 and the support arcs 156, but spring back up when the knobs 160 meet the holes 154.

In an embodiment shown on the left side of Figure 3D, one possible shape of the handle bar 152 is shown. This bar 152 may comprise the holes 154. In an embodiment the bar 152 also comprises protrusions 162 that are adapted to fit against the outer surface of one of the arc members 156. This may strengthen the attachment further, as the protrusions 162 avoid lateral movement within the arc member 156.

Another embodiment of the bar 152 is shown on the middle of Figure 3D. This embodiment may not need the knobs 154, 160. Instead, secure fastening of the handle to the parts 110, 120 may be achieved protrusions 164 that are adapted to securely fit against the arc members 156. The engagement of the protrusions 164 against the members 156 thus locks the handle to the parts 110 and/or 120.

Yet one alternative embodiment for the bar 152 is shown on the right-hand side of Figure 3D. In this embodiment, the bar 152 comprises shaped apertures 166 and the parts 110 and 120 may comprise complementarily shaped protrusions (not shown in the Figure) which may be twisted from the stem around a joint, for example. These shaped protrusions may be put through the shaped apertures 166 and then twisted so that the protrusions cannot slip away from the apertures 166. This may lock the handlebar 152 to the device 100. With this embodiment, there may not be any need for the arcs 156, for example. In one embodiment, the apertures are horizontal, instead of vertical.

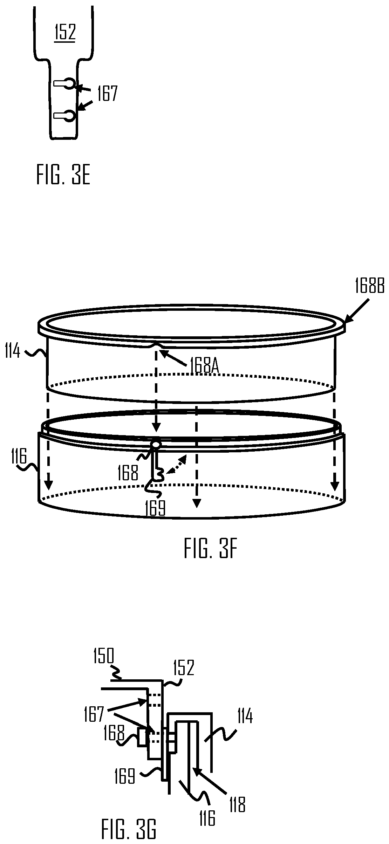

In one embodiment shown in Figures 3E-3G, the bar 152 comprises shaped apertures 167 and the parts 110 and 120 may comprise complementary knobs 168 (figure shows only the part 110, for simplicity). In this embodiment, the user may put the knobs 168 of the parts 110, 120 through the apertures 167 of the handle bar 152, and in this way lock the parts 110, 120 to each other. If the user wants to use only one part (e.g. part 110), the user may put the knob 168 of the part 110 through one of the apertures 168 of the handle. This is depicted in Figure 3G.

Thus, the protrusion(s) or knob(s) 168 having e.g. round shape may be putthrough the round part of the shaped aperture(s) 167 and then the handle (and thus the aperture(s) 167) may be slid in relation to the round protrusion(s) 168 so as to have the round protrusions overlapping with the narrow part of the aperture(s) 167. In an embodiment, the apertures 167 have the same vertical shape as in the right-hand side image of Figure 3G, or the apertures of that Figure may be horizontal, instead of vertical.

Figures 3F and 3G further show how e.g. the subpart 114 may have a latch 169. This may be advantageously pivotably attached to the protrusion 168. When the other part 120 is placed on top of part 110, and the other part 120 also has such protrusion, the latch 169 may be pivoted 180 degrees, and the recess in the latch may secured around the knob 168 of the part 120, so as to lock the parts together on one side of the device100. The other side may be locked e.g. by the hinge of Figure 1A or by the latch structure of Figures 1F-1G.

Instead of or in addition to having the latch 169 in connection of the knob 168, as in Figure 3F-3G, it may be beneficial to use an inter-part locking mechanism 184 of Figure 1E to lock the parts 110 and 120 together on the side to of the device 100. As shown in Figure 1E, the inter-part locking mechanism 184 may be attached to the surface of the parts 110, 120. The part 120 may comprise a locking bar pivotable around a hinge, or a lockable latch. One end of the locking bar with the hinge may be attached to the surface of the part 120, while the other end of the locking bar may be locked to the part 120 (when the user wants to open the parts 110, 120), or locked to the surface of the other part 110 (as shown with the dashed lines in Figure 1E). In this way the two parts 110, 120 may be locked against each other for transportation, for example. The locking may take place with a pin through a hole -structure, or with any other structure known to a skilled person. This structure 169 and/or 184 may be useful, when the handle 150 and the locking mechanism 148 therein is not designed to lock the parts together, or as an additional security for the lock. In an embodiment, there is no latch 169, 184, and the handle's attaching mechanism 148 is used for the locking.

Figure 3F and 3G further show how the subpart 114 may have a recess 168A in the collar 168B. This recess 168A may, when the parts are on top of each other as shown with the dashed arrows in Figure 3F, rest on top the arm of the knob 168, as shown in Figure 3G. One advantage of such recess 168A is that the circular placement of the subparts with respect to each other is the same every time the parts are placed on top of each other.

Above provides some possible, nonlimiting embodiments of the attaching mechanism 148 of the handle. However, also other types of attaching solutions known to a skilled person may work in attaching the handle 150 to the parts 110, 120.

As illustrated in Figure 1A and 1E, the handle 150 may be attached to the device 100 in different directions. This may be due to the symmetrical shape of the handle bar 152, and due to the dimensions of the handle bar 152 with respect to the dimensions of the respective part 110, 120.

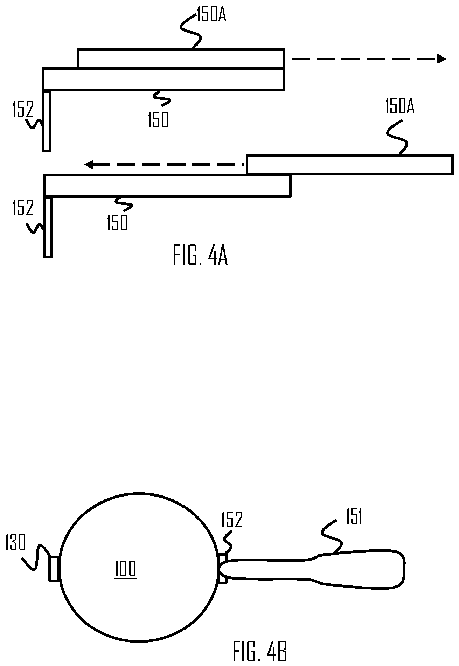

Let us now look at some more embodiments with respect to the handle 150. In an embodiment, as shown in Figure 4A, one or more of the at least one handle 150 comprises an extension member 150A allowing extension of the handle 150. This may be beneficial so as to avoid the user being too close to the open fire, when using the device to heat the food. The extension of the extension member 150A along the handle 150 may be achieved with any known solutions for such extension, such as telescopically whereby different sections may be nested one within another and extended as pulled. There may be a handle extension prevention mechanism to keep the extension at a desired position. Such handle extension prevention mechanism may be achieved by use of a friction insert mechanism where e.g. there is a collar surrounding the handle 150 which can be releasably tightened to prevent the telescopic movement of the sections. The extension may be applicable on any leg of the L-shape handle.

In an embodiment, as shown in Figure 4B, one or more of the at least one handle 150 comprises a spatula 151, which is removably attached to the handle 150 or the handle 150 is formed in a shape of spatula 151. This may provide benefits in outdoor use because the user need not bring an extra spatula for a frying pan. The spatula 151 may be made of wood, for example, or plastic or silicone. The extension related embodiment of Figure 4A may be combined with the spatula-related embodiment e.g. such that the handle of the spatula 151 comprises the nested sections enabling extension.

In one embodiment, the device 100 may comprise an inter-part locking mechanism to lock the parts 110, 120 together during transportation, such as any of the inter-part locking mechanisms shown in any of Figures 3F-3G, 1F-1G, 5A-5C and 6, to mention only a few non-limiting examples. In general, the device 100 may comprises at least one locking mechanism for removably fastening the first part 110 to the second part 120 on at least one point of the outer surface of the device 100. In an embodiment, the handle may be non-scratching material, such as wood.

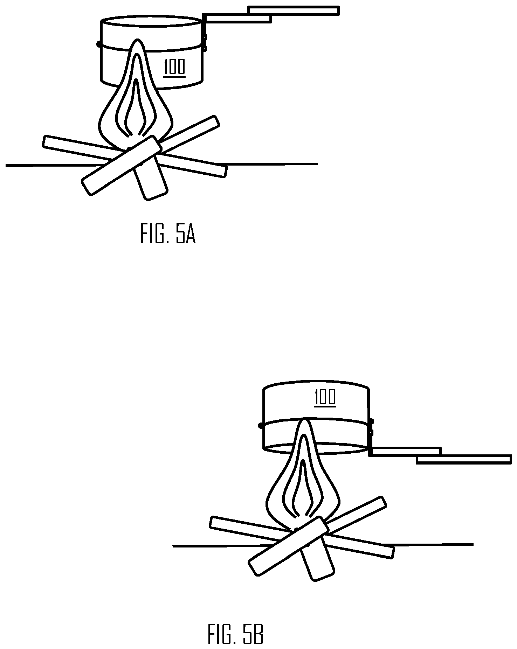

Figures 5A and 5B show how the device 100 may be used on top of an open fire and/or embers. As shown, owing to the handle attaching means keeping the parts 110, 120 together, the user may heat the food inside the enclosed chamber 140 from every side of the device 100. This may provide for even warming of the food. The telescopic or otherwise long enough handle may enable the user staying far enough from the hot fire. The device 100 may be used also for heating food on other places providing heat than on top of an open fire. The spaces 118,128 may prevent the burning of the food inside the chamber. Yet, when the device 100 is taken away from the heat source, the outer surface cools faster than if there was no spaces 118, 128, while the food inside the inner subpart says warm.

The objects or parts of the device 100, such as subparts, handles, different mechanisms (locking, attaching, fastening, etc.), may be manufactured by casting, such as die-casting, for example, or any other suitable method, such as deep drawing, or pressure turning. In another embodiment, these may be manufactured by 3D printing. Wooden parts may be manufactured by any appropriate wood cutting or processing tool, such as by woodturning, for example.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Furthermore, it is clear to a person skilled in the art that the described embodiments may, but are not required to, be combined with other embodiments in various ways.

## Claims

1. A device (100) for heating food, comprising:
a first part (110) comprising a cavity (112) and at least a double layer wall structure providing a space (118) between an inner subpart (114) and an outer subpart (116);
a second part (120) comprising a cavity (122) and at least a double layer wall structure providing a space (128) between an inner subpart (124) and an outer subpart (126); and
at least one removable handle (150) for holding the device,
wherein the first and second parts (110, 120) are placeable against each other such that the cavities (112, 122) form an enclosed chamber (140) for the food and outer surfaces of the outer subparts (116, 126) form a heat receiving surface.

2. The device (100) of claim 1, wherein the device further comprises a hinge (130) for fastening the first part (110) to the second part (120) at one side of the device (100) and for allowing a pivotable opening of the parts (110, 120).

3. The device (100) of any of claims 1 to 2, wherein the device further comprises at least one locking mechanism (134,136,168,169, 184) for removably fastening the first part (110) to the second part (120) on at least one point of the outer surface of the device (100).

4. The device (100) of any of claims 1 to 3, wherein the cavities (112, 122) have different depths.

5. The device (100) of any of claims 1 to 4, wherein each of the inner subparts (114, 124) and the respective outer subparts (116, 126) comprise a mutually complementary fastening mechanism configured to fasten the subparts (114, 116 or 124, 126) together.

6. The device (100) of any of claims 1 to 5, wherein:
each of the at least one handle (150) and each of the outer surfaces of the first and second parts (110, 120) comprise a mutually complementary attaching mechanism (148) for removably attaching the at least one handle 150 to one or both of the outer surfaces, and
the attaching mechanism (148), when the handle 150 is attached to both of the outer surfaces, locks the first and second parts (110, 120) against each other such that the chamber (140) becomes closed.

7. The device (100) of claim 6, wherein:
the attaching mechanism of the handle allows attaching the handle (150) on the device (100) in a first position such that the handle extends away from the parts (110, 120); and
the attaching mechanism of the handle and the dimensions of the handle (150) allow attaching the handle on the device (100) in a substantially opposite direction than in the first position such that the handle lies against the outer surface of the part (110 or 120).

8. The device (100) of any of claims 1 to 7, wherein one or more of the at least one handle (150) comprises an extension member (150A) configured to allow extension of the handle (150).

9. The device (100) of any of claims 1 to 8, wherein one or more of the at least one handle (150) comprises a spatula (151).

10. The device (100) of any of claim 1 to 9, wherein at least one of the parts (110, 120) comprises a bottom wall and substantially upwards extending sidewalls.

11. The device (100) of any of claim 1 to 10, wherein at least one of the parts (110, 120) comprises transparent material allowing user to see to the chamber (140).
